# EUROPEAN PATENT APPLICATION

(11) **EP 1 308 369 A1**
(43) Date of publication of application: **07.05.2003**
(21) Application number: 01953340.5
(22) Date of filing: 30.07.2001
(51) Int. Cl.: B62D 11/10, A01B 69/00

(54) **WORKING VEHICLE**

(30) Priority: 31.07.2000 JP 2000231262
(71) Applicant: YANMAR AGRICULTURAL EQUIPMENT CO., LTD., Osaka-fu 530-0013 (JP); Seirei Industry Co., Ltd., Okayama-shi, Okayama-ken 702-8515 (JP)
(72) Inventor: FUJIKI, Katsumi Seirei Industry Co., Ltd., Okayama-shi Okayama 702-8515 (JP)
(74) Representative: Bertrand, Didier
(86) International application number: JP0106563
(87) International publication number: WO02010001

(57) **Abstract**

The work vehicle is provided with an operation section having a steering wheel for steering the traveling sections mounted through a steering wheel support shaft coupled operatively with a steering link mechanism system built in a link box that in turn is operatively coupled with a trunnion arm member of a cornering non-stage shift system for accelerating or decelerationg a rotational velocity of a cornering power transmission system to associate an operation of the steering wheel for left-hand or right-hand rotation with an operation fo the cornering non-stage shift system for normal rotation or reverse rotation. With the structure and action, the work vehicle can ensure a favorable operating performance.

## Description

### TECHNICAL BACKGROUND

The present invention relates to a work vehicle for carrying out agricultural work and related work.

### BACKGROUND ART

One type of work vehicles is composed of a pair of left-hand and right-hand traveling sections, each of a crawler type, a vehicle body frame member interposed between the pair of the left-hand and right-hand traveling sections with a motor section, an operation section and a transmission section disposed thereon in this order from the front portion to the rear portion of the vehicle body. The traveling sections are operatively coupled with the motor section through the transmission section, and the transmission section combines a rotational velocity of a straight-traveling power transmission system and a rotational velocity of a cornering power transmission system. The combined rotational velocity then drives independently and separately each of the left-hand and right-hand traveling sections.

Each of the left-hand and right-hand traveling sections is further composed of a longitudinal frame member extending in the forward-rearward direction, drive and follower wheels mounted on a front end portion and a rear end portion of the longitudinal frame member, and a crawler wound about the drive and follower wheels.

The motor section disposed at the front portion of the vehicle body, and the operation section is located behind the motor section. The operation section is provided with a steering lever, and a steering link mechanism system is interposed between the steering lever and the transmission section to conduct the steering operation of the vehicle body.

The work vehicle of the above-mentioned conventional type, however, has the drawbacks as will be described hereinafter.
(1) The conventional work vehicle of the above type presents the disadvantage that it cannot thrust its vehicle body into a soft ground in which the earth is piled up about to the height on level with the lowest ground level.
(2) The conventional work vehicle further suffers from the problem that a forward visible field in front of the vehicle body cannot be ensured for the operator handling the steering lever while seated on the operator' s seat in the operation section due to the fact that the motor section is disposed in front of the steering lever mounted in the operation section.
(3) Although the conventional work vehicle of the above type can steer the vehicle body by means of the steering lever, however, this operation with the steering lever presents the disadvantage that it is unlikely for the operator to secure a steering feeling for adjusting a fine cornering velocity of the vehicle body.
(4) The conventional work vehicle has the problem that the steering link mechanism system restricts the freedom of layouts so that a compact disposition cannot be achieved.
(5) For the conventional work vehicle with the traveling sections each of the crawler type having the structure as described above, a link mechanism system for shifting the cornering directions is separately provided in order to ensure operability and safety because the cornering steering direction becomes opposite to the cornering operation direction of the vehicle body at the time of forward traveling and rearward traveling. This work vehicle, however, may cause a so-called breakdown at the link connection portion so that the operation cannot be achieved with a high accuracy and a good operability cannot be ensured.

### DISCLOSURE OF THE INVENTION

Therefore, the present invention provides a work vehicle having a pair of left-hand and right-hand traveling sections each of a crawler type, a frame member of a vehicle body interposed between the pair of the left-hand and right-hand traveling sections with an operation section, a motor section and a transmission section disposed on the vehicle body frame member; wherein the traveling section comprises a longitudinal frame member extending in a longitudinal direction; front and rear follower wheels mounted on front and rear end portions of the longitudinal frame member, respectively; a drive wheel interposed between and above the front and rear follower wheels and operatively coupled with the motor section through the transmission section; and a crawler in a triangular form, when looked from the side, wound about the drive wheel and the front and rear follower wheels; and wherein the operation section is provided with a steering wheel disposed at a forefront portion of the vehicle body.

Further, the present invention has the features as will be described hereinafter.
(1) The vehicle body is provided with a front PTO shaft at a front portion thereof and the vehicle body is provided with a rear PTO shaft at a rear portion thereof; and the front PTO shaft and the rear PTO shaft are operatively coupled with the motor section through the transmission section.
(2) The work vehicle comprising a pair of left-hand and right-hand traveling sections each of a crawler type, a frame member of a vehicle body interposed between the pair of the left-hand and right-hand traveling sections with an operation section, a motor section and a transmission section disposed on the vehicle body frame member; having the pair of the left-hand and right-hand traveling sections coupled operatively with the motor section through the transmission section; and driving the pair of the left-hand and right-hand traveling sections independently and separately by means of a combined rotational velocity obtained by combining a rotational velocity of a forward-traveling power transmission system with a rotational velocity of a cornering power transmission system; in which the operation section is provided with a steering wheel for steering the pair of the left-hand and right-hand traveling sections and the steering wheel is operatively coupled with a cornering non-stage shift system for accelerating and decelerating the rotational velocity of the cornering power transmission system to associate an operation of the steering wheel for rotating in the left direction and the right direction with an operation of the cornering non-stage shift system for normal and reverse rotation.
(3) The steering wheel is operatively coupled with a steering link mechanism system through a steering wheel support shaft and the steering link mechanism system is operatively coupled with a trunnion arm member of the cornering non-stage shift system.
(4) A trunnion arm member of a forward non-stage shift system is operatively coupled with a shift lever for shifting a forward traveling operation or a rearward traveling operation or shifting a speed of the vehicle body to associate an operation of the shift lever for shifting a forward traveling operation or a rearward traveling operation or shifting a speed of the vehicle body with the operation of the forward non-stage shift system for normal or reverse rotation.
(5) The vehicle body is provided with a floor section at a front portion thereof and a front portion of the floor section is formed inclining forward in an upward way.
(6) The steering link mechanism system is formed in a compact manner and disposed directly under the front portion of the floor section formed inclining forward in an upward way.
(7) The steering link mechanism system is provided with a rotational direction shift mechanism system for shifting a normal rotational direction or a reverse rotational direction of an output shaft of the cornering non-stage shift system; and the rotational direction shift mechanism system is operatively coupled with the shift lever to associate an operation of the shift lever for the forward shift or the rearward shift with an operation of the output shaft of the cornering non-stage shift system for shifting the normal rotational direction or the reverse rotational direction by the rotational direction shift mechanism system.

### BRIEF DESCRIPTION OF THE ACCOMPANYING DRAWINGS

Fig. 1 is a side view showing a work vehicle according to the present invention.
Fig. 2 is a plan view showing a transmission section of the work vehicle.
Fig. 3 is a side view in section showing a link box.
Fig. 4 is a plan view in section showing the link box.
Fig. 5 is a sectional view when view along line I-I of Fig. 3.
Fig. 6 is a sectional view when view along line II-II of Fig. 3.
Fig. 7 is a sectional view when view along line III-III of Fig. 3.

### BEST MODES FOR CARRYING OUT THE INVENTION

The work vehicle according to the present invention has a basic structure comprising a pair of left-hand and right-hand traveling sections each of a crawler type and a vehicle body frame interposed between the pair of the left-hand and right-hand traveling sections and having an operation section, a motor section and a transmission section disposed on the frame member of the vehicle body. The motor section is operatively coupled with the left-hand and right-hand traveling sections via the transmission section. A rotational velocity of a straight-traveling power transmission system is combined with a rotational velocity of a cornering power transmission system at the transmission section, and the combined rotational velocity drives the left-hand and right-hand traveling sections separately and independently.

As the featuring structure of the work vehicle, each of the left-hand and right-hand traveling sections is composed of a longitudinal frame member extending in the forward-rearward direction, front and rear follower wheels mounted respectively on the respectively front and rear end portions of the longitudinal frame member, a drive wheel disposed between and above the front and rear follower wheels and coupled operatively with the motor section through the transmission section, and a crawler in a triangular form, when looked from the side, wound among the drive wheel and the front and rear follower wheels.

Further, the vehicle body is provided with the front PTO shaft at the front portion thereof, and it is provided with the rear PTO shaft at the rear portion thereof, in which the front and rear PTO shafts are operatively coupled with the motor section through the transmission section.

Moreover, the operation section is provided with a steering wheel for steering the left-hand and right-hand sections at the forefront portion of the vehicle body, in which the steering wheel is operatively coupled with a steering link mechanism system through a steering wheel support shaft to operatively couple the steering link mechanism system with a trunnion arm member of a cornering non-stage shift system for accelerating or decelerating a rotational velocity of the cornering non-stage shift system and to associate an operation of the steering wheel for left-hand rotation and right-hand rotation with an operation of the cornering non-stage shift system for normal rotation or reverse rotation.

Furthermore, a trunnion arm member of a forward-traveling non-stage shift system for accelerating or decelerating a rotational velocity of a forward-traveling power transmission system is operatively coupled with a shift lever for shifting the forward traveling or a rearward traveling and changing the velocity of the vehicle to associate the operation of the shift lever for shifting the forward traveling or rearward traveling and changing the velocity of the vehicle with the operation of the forward-traveling non-stage shift system for normal rotation or reverse rotation.

With the structure as described above, the steering link mechanism system is built in a link box in the form of a flat box, when looked from the side, and disposed under the floor section disposed at the front portion of the vehicle body. Further, the steering link mechanism system is provided with a rotational direction shift mechanism system for shifting the normal and reverse rotational direction of an output shaft of the cornering non-stage shift system, which is operatively coupled with the shift lever to associate the forward and rearward traveling operation of the shift lever with the operation of the cornering non-stage shift system for shifting the normal and reverse rotational direction.

The present invention will be described in more detail by way of working examples with reference to the accompanying drawings.

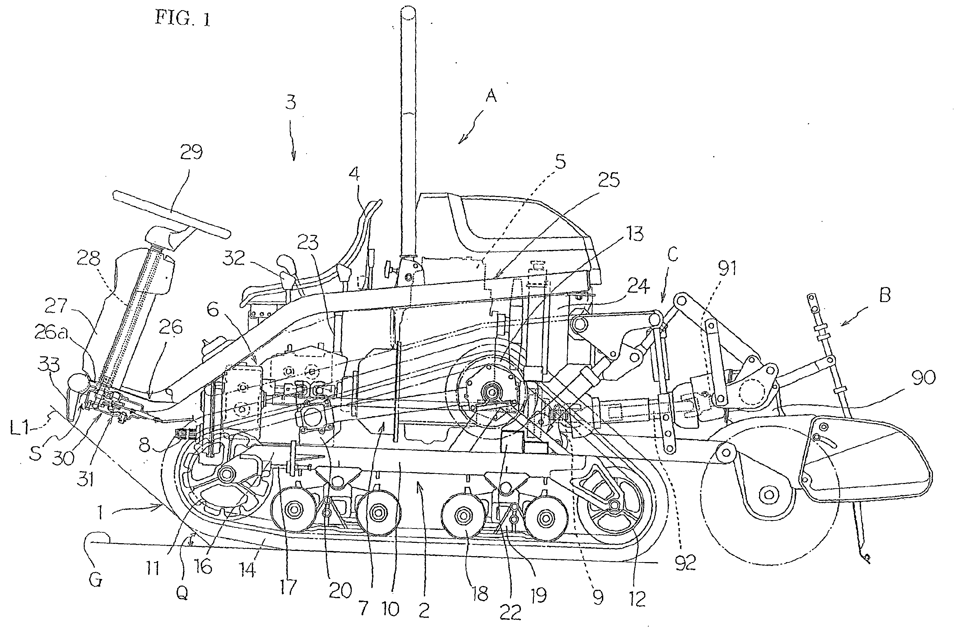

In Fig. 1, the work vehicle according to the present invention is shown as a work vehicle A to which a tilling machine B as a work machine is connected at its rear end portion via a lifting link mechanism system C.

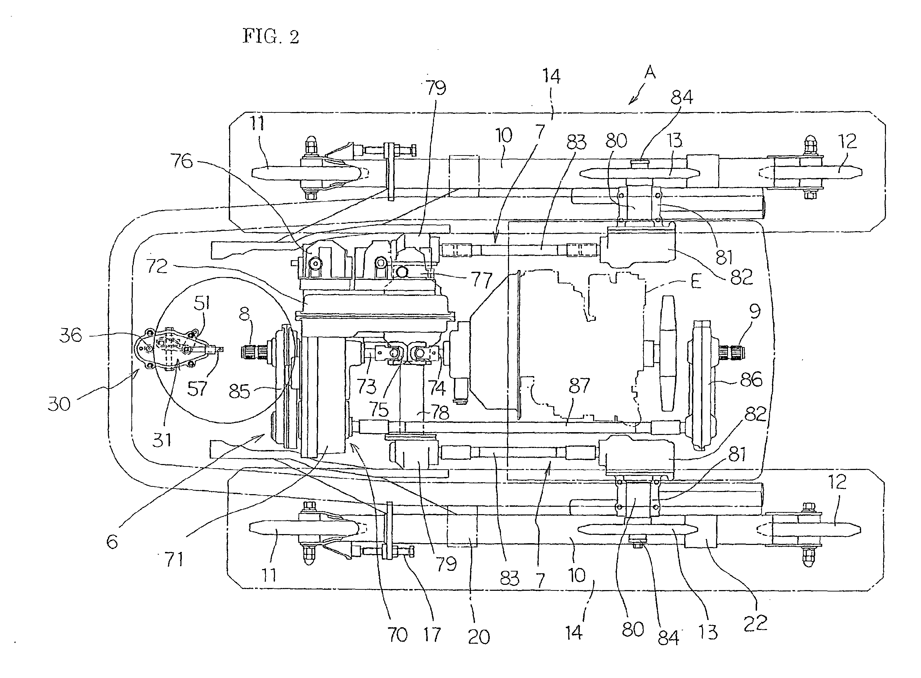

As specifically shown in Fig. 2, the work vehicle A is composed of a pair of left-hand and right-hand traveling sections 1 and 1, each of a crawler type, and a vehicle body frame member 2 interposed between the traveling sections 1 and 1. Further, the frame member 2 is provided with an operation section 3 thereon, and a motor section 5 is disposed on the frame member 2 behind an operator' s seat 4 of the operation section 3. A transmission section 6 is disposed under the operator' s seat 4, which is operatively coupled with the motor section 5. Moreover, the transmission section 6 is operatively coupled with drive wheels 13 and 13 of each of the traveling sections 1 and 1 via traveling transmission mechanism systems 7 and 7, respectively.

A front PTO shaft 8 is disposed projecting forward at the front portion of the vehicle body, and a rear PTO shaft 9 is disposed projecting rearward at the rear portion thereof. The front and rear PTO shafts 8 and 9 are operatively coupled with the transmission section 6.

The traveling section 1 is composed of a longitudinal frame member 10 extending in the forward-rearward direction, a front follower wheel 11 and a rear follower wheel 12, both being mounted on the respectively front and rear end portions of the longitudinal frame member 10, a drive wheel 13 interposed between and disposed above the front and rear follower wheels 11 and 12, and a crawler 14 in a triangular shape, when looked from the side, wound among the drive wheel 13 and the front and rear follower wheels 11 and 12. In Fig. 2, reference numeral 16 stands for an idler fork, reference numeral 17 for a bolt for adjusting the forward or rearward movement of the idler fork, reference numeral 18 for a rolling wheel, and reference numeral 19 for a crawler-slippage preventive member.

The vehicle body frame member 2 is composed of a front latitudinal frame member 20 and a rear latitudinal frame member 22, both being interposed between the pair of the left-hand and right-hand longitudinal frame members 10 and 10, respectively, and disposed in a predetermined spaced relationship apart therefrom, a front support member 23 disposed rising upward from the front latitudinal frame member 20, a rear support member 24 disposed rising upward from the rear latitudinal frame member 22, and a guard frame member 25 in the form of a square-shaped ring, when looked from the top, interposed between the front and rear support members 23 and 24, respectively.

As shown in Figs. 1 to 3, the operation section 3 is provided with a floor section 26 at the front portion of the guard frame member 25, which in turn is composed of a front portion 26a extending rising in a forward direction. Further, a space S is formed at the position directly under the front portion 26a of the floor section 26, in which a steering link mechanism system 31 is disposed.

On the front portion 26a of the floor section 26, a steering column 27 is disposed standing upright at the front portion 26a thereof, and a steering wheel support shaft 28 extending upwardly is inserted into the steering column 27. Further, a steering wheel 29 is disposed at the forefront portion of the vehicle body by mounting the steering wheel 29 on the upper end portion of the steering wheel support shaft 28.

In the space S formed directly under the front portion 26a of the floor section 26, a steering link mechanism system 31 built in a link box 30 is operatively coupled at the bottom end portion of the steering wheel support shaft 28. Further, a trunnion arm member 76a of a cornering non-stage shift system 76, as will be described in more detail later, is operatively coupled with the steering link mechanism system 31 to associate an operation of the steering wheel 29 for left-hand and right-hand rotations with the operation of the cornering non-stage shift system 76 for normal and reverse rotations.

A steering link mechanism system-protective member 33 is disposed directly in front of the link box 30 hanging at the front end portion of the guard frame member 25 in order to cover and protect the front portion of the steering link mechanism system 31.

Further, the steering link mechanism system 31 is disposed above a virtual line L1 at an angle θ set between the virtual line L1 and the ground surface G, in which _{_{┌ ┌}} the virtual line L1 is the line tangent to a portion of the crawler 14 passing under the bottom end of the steering link mechanism system-protective member 33 and wound about the front follower wheel 11.

With the structure as described above, the steering link mechanism system-protective member 33 can ensure a sure protection of the steering link mechanism system 31 from bumping into irregular surfaces on the ground G and consequently from damages, breakage and so on due to.

The operator' s seat 4 is disposed behind the steering wheel 29, and a shift lever 32 is disposed at the left-hand side position of the operator' s seat 4, which can shift the forward-rearward movements and speeds of the vehicle.

The shift lever 32 is operatively coupled with a trunnion arm member 77a of a straight-traveling non-stage shift system 77 that can accelerate or decelerate the rotational velocity of a forward-traveling power transmission system as will be described in more detail later in order to associate the operations of the shift lever 32 for shifting forward and rearward movement and speeds of the vehicle body with the operations of the straight-traveling non-stage shift system 77 for shifting normal and reverse rotations and accelerating or decelerating velocities of the vehicle body.

The steering link mechanism system 31 built in the link box 30 is further provided with a rotational-direction shift mechanism system 34 for shifting the normal and reverse rotational directions of an output shaft (not shown) of the cornering non-stage shift system 76, which in turn is operatively coupled with the shift lever 32 so as to associate the operations of the shift lever 32 for shifting the forward-rearward movements and the velocities of the vehicle with the operations of the output shaft of the cornering non-stage shift system 76 for shifting the normal and reverse rotational direction by means of the rotational-direction shift mechanism system 34.

As specifically shown in Figs. 2 to 4, the link box 30 extends in the forward-rearward direction, when looked from the top, and is formed in a flat box shape, when looked from the side. The link box 30 is mounted from the bottom on the guard frame member 25 through a stay 35.

At the front portion of the link box 30, an association shaft 36 with its axis directed upwardly is supported rotatably about the axis thereof, and an upper edge portion of the association shaft 36 is disposed projecting upwardly from a projection hole 41 formed in a ceiling portion 30a of the link box 30 and operatively coupled coaxially with a lower edge portion of the steering wheel support shaft 28. In the drawings, reference numeral 37 stands for a support shaft casing member.

Moreover, the association shaft 36 is provided with an output gear 38 at the top portion thereof and with a rotation-regulating recipient piece member 39 at the bottom portion thereof, the rotation-regulating recipient piece member 39 being disposed projecting rearward in a state intersecting at a generally right angle. On the other hand, the rotation-regulating recipient piece member 39 rotates in association with the rotational operations of the steering wheel 29 from the neutral position in the rearward projecting state to allow the tip portion thereof to come into engagement with a rotation-regulating piece member 40 from one of the left-hand and right-hand directions, the rotation-regulating piece member 40 being disposed projecting upwardly from the front end portion of the bottom part 30b of the link box 30. Moreover, this can regulate each of the left-hand and right-hand rotations of the steering wheel 29 at the angle within a range smaller than 180 degree.

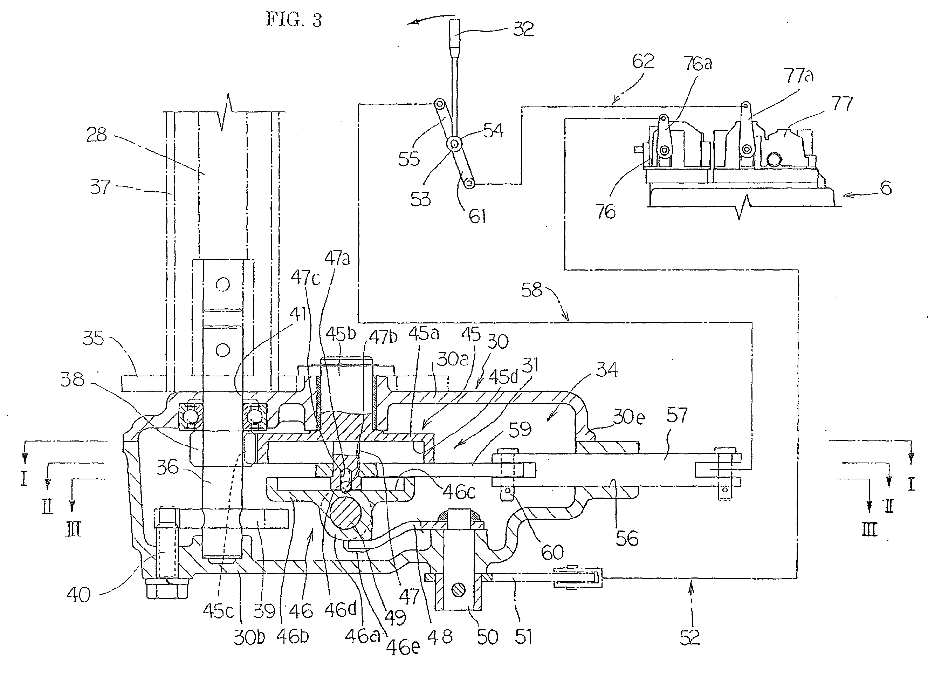

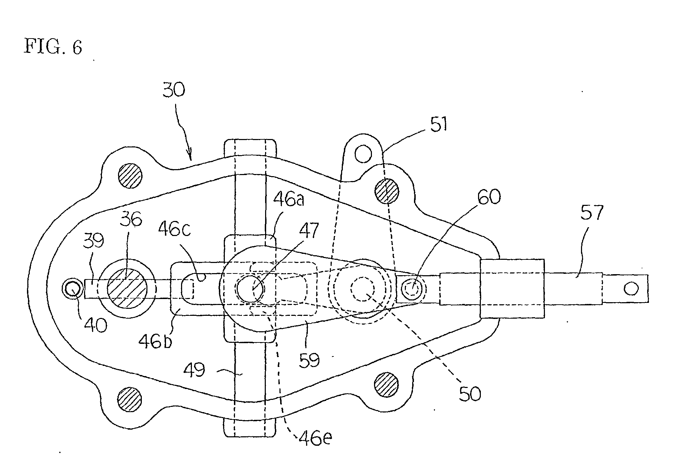

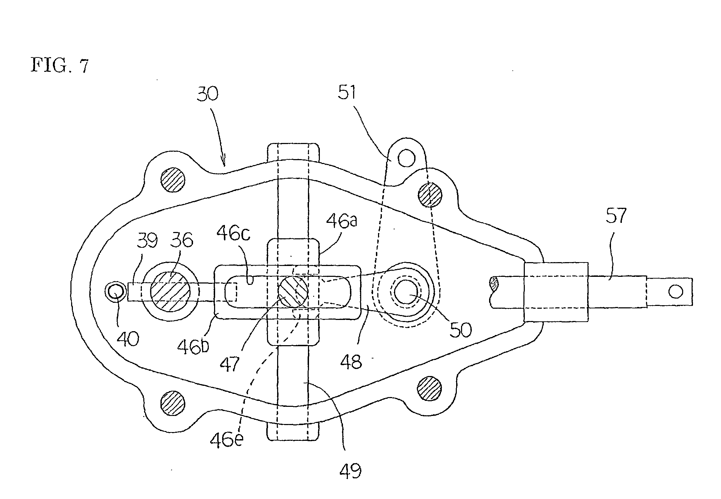

As shown in Figs. 3 to 7, the steering link mechanism system 31 built in the link box 30 is composed of a swinging member 45 mounted at the middle portion of the ceiling part 30a of the link box 30 so as to swing to the left and to the right, a laterally movable member 46 interposed between a left side wall 30c and a right side wall 30d of the link box 30 and mounted at the position directly under the laterally movable member 46 so as to move in the left-hand and right-hand directions, an engagement pin 47 interposed between the swinging member 45 and the laterally movable member 46 so as to engage with the two members, and an association arm member 48 with the tip portion thereof engaged with the laterally movable member 46 and with the base end portion thereof mounted to the bottom part 30b of the link box 30 so as to swing to the left and to the right.

The swinging member 45 is composed of a main body 45a formed extending in the forward and rearward directions, and a swinging member support shaft 45b disposed projecting upwardly from the central top portion of the main body 45a toward the axial line thereof. The swinging member support shaft 45b is supported on the ceiling part 30a of the link box 30.

The main body 45a of the swinging member 45 is formed in such a manner that the front edge portion thereof is shaped in an arc form and a partial gear 45c is provided on the arc-shaped face. Further, the swinging member 45a is provided at the bottom face thereof with an engageable groove 45d at the swinging member side, which extends in the forward and rearward directions.

The partial gear 45c is in mesh with an output gear 38 formed at the upper portion of the association shaft 36 and the swinging member 45 is disposed so as to swing about the swinging member support shaft 45b in association with the association shaft 36.

On the other hand, the laterally movable member 46 is composed of a cylindrical main body 46a thereof with the axial line thereof directed to the left-hand and right-hand directions, and an engagement piece member 46b linked to the top face of the cylindrical main body 46a thereof at a state intersecting at a normal angle. The main body 46a of the laterally movable member 46 is slidably mounted on a slide support shaft 49 interposed between the left-hand and right-hand side walls 30c and 30d of the link box 30, respectively.

The engagement piece member 46b is shaped in a box form with the open top extending in the forward and rearward directions, and the inside of the engagement piece member 46b forms an engageable groove 46c at the laterally movable member side. Reference symbol 46d stands for a depressed portion for a temporary stop at the neutral position, which is formed at a central portion of the engageable groove 46c at the laterally movable member side and on a virtual axial line of the swinging member support shaft 45b.

The engagement pin 47 is formed with the axial line thereof directed upwardly and forms a depressed portion 47a for accommodating a temporarily stopping ball, which is open at the bottom portion thereof. The depressed portion 47a accommodates a temporarily stopping ball 47b and a pressing spring 47c urging elastically the temporarily stopping ball 47b in a downwardly pressed state to engage the temporarily stopping ball 47b with the depressed portion 46d and to temporarily stop the engagement pin 47 at the neutral position.

Further, the engagement pin 47 is slidably engaged at the bottom end portion thereof with the engageable groove 46c of the engagement piece member 46b at the laterally movable member side, and it is slidably engaged at the top portion thereof with the engageable groove 45d of the swinging member' s main body 45a at the swinging member side.

The association arm 48 at the base end portion is mounted on the top portion of a shaft 50 with the axial line thereof inserted upwardly into the bottom part 30b of the link box 30. On the other hand, the association arm 48 at the tip portion is engaged with a branched engagement piece member 46e formed at the central bottom portion of the main body 46a of the movable member.

Further, an operational arm member 51 at the base end portion extending toward the left-hand side is mounted on the bottom portion of the shaft 50 projecting outwardly from the bottom part 30b of the link box 30, and the operational arm member 51 at the tip portion thereof is operatively coupled with the trunnion arm member 76a of the cornering non-stage shift system 76 via a cornering HST association mechanism system 52.

The rotational-direction shift mechanism system 34 for shifting the normal and reverse rotational direction of the output shaft of the cornering non-stage shift system 76 is interposed between the shift lever 32 and the engagement pin 47.

More specifically, the bottom portion of the shift lever 32 is mounted through a boss portion 54 on a lever support shaft 53 with its axial line directed in the left-hand and right-hand directions, and a shift arm member 55 is disposed on a boss portion 54 projecting upwardly in the forward direction.

A rear wall 30e of the link box 30 is provided with a rod insertion hole 56, and a rod 57 extending in the forward-rearward direction is inserted into the rod insertion hole 56 slidably in the forward-rearward direction. Between the rear end portion of the rod 57 and the tip portion of the shift arm member 55 is interposed a shift operation-association mechanism system 58. Further, the front end portion of the rod 57 is supported by and connected to the rear end portion of an engagement pin-connecting piece member 59 through a connecting pin 60 with its axial line directed upwardly, and the engagement pin 47 is connected to the front end portion of the engagement pin-connecting piece member 59.

Further, the boss portion 54 is provided with a straight-traveling HST operation arm member 61 projecting rearward and downward, and a straight-traveling HST association mechanism system 62 is interposed between the straight-traveling HST operation arm member 61 and the trunnion arm member 77a of the straight-traveling non-stage shift system 77.

When the shift lever 32 is held in the manner as described above at the neutral position at which it stands upright, as shown in Fig. 3, the temporarily stopping ball 47b of the engagement pin 47 is engaged with the depressed portion 46d for use in temporarily stopping the engagement pin at the neutral position and the engagement pin 47 is held in such a state that it is temporarily stopped at the neutral position.

In this state, even if the steering wheel 29 would be rotated in either of the left-hand or right-hand direction, the laterally movable member 46 cannot move in the lateral direction due to the fact that the swinging member support shaft 45b and the engagement pin 47 are positioned on the identical axial line, although the swinging member 45 could be swung by the partial gear 45c about the swinging member support shaft 45b in either of the left-hand or right-hand direction.

Therefore, the association arm member 48 engaged with the laterally movable member 46 at the tip portion does not work so that the cornering non-stage shift system 76 is held at the neutral position.

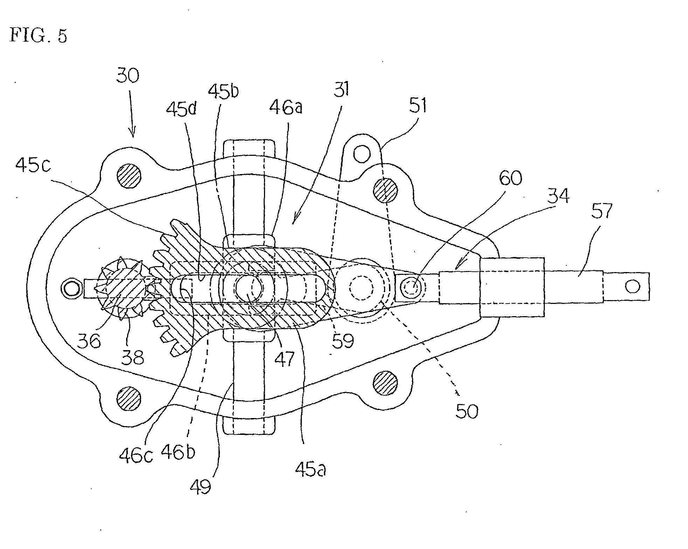

Then, as shown in Fig. 5, when the shift lever 32 is rotated forward to the forward-traveling shift status, the rotational-direction shift mechanism system 34 is allowed to slide forward as a whole to slidably transfer the engagement pin 47 to the position of the front edge portion within the engageable groove 46c at the laterally movable member side and the engageable groove 45d at the swinging member side, and the trunnion arm member 77a of the straight-traveling non-stage shift system 77 is shifted to the forward-traveling side through the straight-traveling HST association mechanism system 62.

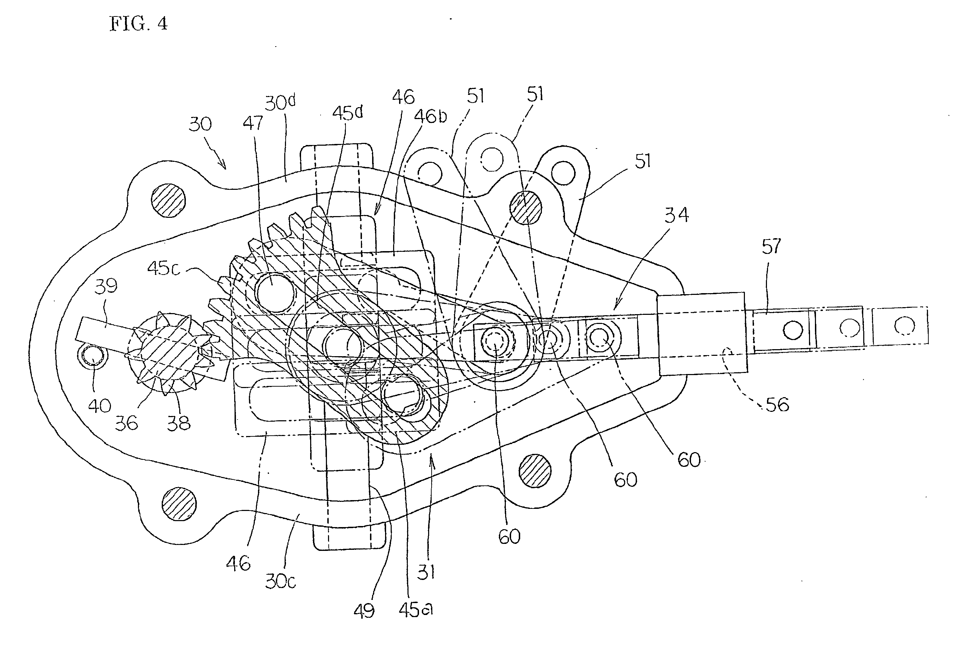

For example, as shown in Fig. 4, when the steering wheel 29 is rotated to the left-hand side in the state as described above, the swinging member 45 is swung to the right-hand side about the swinging member support shaft 45b as indicated by the solid line and then the laterally movable member 46 is moved laterally to the right-hand side through the engagement pin 47.

As a consequence, the association arm member 48 engaged with the laterally movable member 46 at the tip portion thereof is allowed to pivot to the right-hand side and the operational arm member 51 coupled operatively with the association arm member 48 via the shaft 50 pivots rearward from the neutral position (as indicated by the dotted line) directed toward the right-hand side to turn the trunnion arm member 76a of the cornering non-stage shift system 76 in the left-hand direction through the cornering HST association mechanism system 52 and to turn the vehicle body as a whole to the left-hand side from the forward- and straight-traveling status.

Further, when the steering wheel 29 is steered to turn to the right-hand side in the state as described above, each of the swinging member 45, the laterally movable member 46, the association arm member 48, the operational arm member 51, the cornering HST association mechanism system 52 and the trunnion arm member 76a of the cornering non-stage shift system 76 is operated in the opposite direction to turn the vehicle body to the right from the forward- and straight-traveling status.

Then, when the shift lever 32 is steered to pivot rearward to the rearward-traveling status, the rotational-direction shift mechanism system 34 is allowed to slide as a whole in the rearward direction to slidably transfer the engagement pin 47 to the position of the rear edge portion within the engageable groove 46c at the laterally movable member side and the engageable groove 45d at the swinging member side, and the trunnion arm member 77a of the straight-traveling non-stage shift system 77 is shifted to the rearward traveling side through the straight-traveling HST association mechanism system 62.

In this state, for example, as shown in Fig. 4, when the steering wheel 29 is steered to turn to the left-hand side, the swinging member 45 is swung to the right-hand side about the swinging member support shaft 45b and as a consequence the laterally movable member 46 is allowed to move laterally to the left-hand side by means of the engagement pin 47 as indicated by the two-dotted line.

As a consequence, the association arm member 48 engaged with the laterally movable member 46 at the tip portion thereof pivots to the left-hand side and the operational arm member 51 coupled operatively with the association arm member 48 through the shaft 50 then pivots forward from the neutral position (as indicated by the one-dotted line) directed to the right-hand side to turn the trunnion arm member 76a of the cornering non-stage shift system 76 to the right via the cornering HST association mechanism system 52 and then shift the output shaft to the reverse rotational direction and turn the vehicle body to the left and to the rearward-traveling status from the rearward- and straight-traveling status.

Therefore, although the work vehicle according to the present invention is provided with the traveling sections 1 and 1, each of the crawler type, the vehicle body can be turned in the same direction, even when is turned in the rearward- and straight-traveling status, as when it is turned in the forward- and straight-traveling status. This can provide the work vehicle according to the present invention with a favorable level of operability and safety.

Further, when the steering wheel 29 pivots to the right in the state as stated above, each of the swinging member 45, the laterally movable member 46, the association arm member 48, the operational arm member 51, the cornering HST association mechanism system 52 and the trunnion arm member 76a of the cornering non-stage shift system 76 is operated in the opposite direction to turn the vehicle body rearward to the right-hand side from the rearward- and straight-traveling status.

In the embodiments as described above, the steering link mechanism system 31 requiring a high accuracy of arrangement of the link connection portion is incorporated in the link box 30 so that the operation can be carried out with a high degree of accuracy without causing a so-called irregularity and operational performance can be ensured to a favorable extent by incorporating the steering link mechanism system 31 pre-adjusted in the link box 30 with a high degree of accuracy.

Moreover, the link box 30 can reduce the number of assembly work steps to a great extent by forming it in a compact structure, thereby reducing costs of preparation and rendering it easy to arrange for a small-sized work vehicle having a small space, thereby rendering it readily feasible to apply versatile kinds of work vehicles.

The motor section 5 is composed of an engine E as well as a radiator, an air cleaner (although not shown), and so on, disposed in the vicinity of the engine E.

As shown in Fig. 2, the transmission section 6 is composed of a transmission casing member 70, a lateral casing member 71 extending through the transmission casing member 70 in the left-hand and right-hand direction, and a longitudinal casing member 72 extending rearward and linked operatively to the right-hand side end portion of the latitudinal casing member 71 at the front end portion thereof.

Further, the lateral casing member 71 is provided with an input shaft 73, and the engine E is provided with an output shaft 74, in which a universal joint 75 is interposed between the input shaft 73 and the output shaft 74.

Moreover, the rearward extending casing member 72 is provided with a cornering power transmission system and a straight-traveling power transmission system (although not shown), and a combined rotational velocity is created by combining the power of the cornering power transmission system with the power of the straight-traveling power transmission system by means of a planetary gear mechanism system (not shown) mounted in the rearward extending casing member 72. The combined rotational velocity can drive each of the,left-hand and right-hand traveling sections 1 and 1 by means of a traveling transmission mechanism systems 7 and 7, respectively, as will be described hereinafter.

In addition, a cornering non-stage shift system 76 of a electrostatic type at the right-hand side wall thereof, which forms part of the cornering power transmission system, and a straight-traveling non-stage shift system 77 of an electrostatic type, which forms part of the straight-traveling power transmission system, are associatively provided on the right-hand side wall of the rearward extending casing member 72 , and the rotational velocity of the cornering power transmission system can be accelerated or decelerated by the cornering non-stage shift system 76.

Furthermore, the straight-traveling non-stage shift system 77 can be arranged so as to accelerate or decelerate the rotational velocity of the straight-traveling power transmission system in substantially the same manner as described above. Thus, the cornering non-stage shift system 76 and the straight-traveling non-stage shift system 77 can be subjected to operation for accelerating or decelerating the rotational velocity by means of the steering wheel 29 and the shift lever 32.

Each of the traveling transmission mechanism systems 7 and 7 is provided with a drive shaft casing member 78 of a cylindrical form, extending outwardly to the left-hand or right-hand side from the respectively left-hand or right-hand rear side wall of the rearward extending casing member 72, and a front gear casing member 79 is associatively disposed with the outer side end wall of the drive shaft casing member 78.

On the other hand, the rear portion of each of the left-hand and right-hand longitudinal frame members 10 and 10 is provided with each of left-hand and right-hand drive wheel support shaft casing members 80 and 80, each of a cylindrical form, with the axial lines thereof directed in the left-hand and right-hand direction, respectively, through a casing stay member 81. In the inner side end portion of each of the drive wheel support shafts 80 and 80, there is associatively disposed a rear gear casing member 82. Each of the drive wheel support shaft casing members 80 and 80 is operatively coupled with a rear gear casing member 82 at the inner side end portion thereof. Further, a transmission shaft 83 is interposed between the front gear casing member 79 and the rear gear casing member 82 disposed facing in the forward-rearward opposite directions, and a drive wheel support shaft 84 is inserted into each drive wheel support shaft casing member 80. Moreover, the drive wheel support shaft 84 is operatively coupled with the rear gear casing member 82 at the inner side end portion thereof, and each of the drive wheels 13 and 13 is mounted at the outer side end portion of each of the drive wheel support shafts 84 and 84.

With the arrangement of the work vehicle in the manner as described above, the combined rotational velocity formed by combining the rotational velocity of the cornering power transmission system with the rotational velocity of the straight-traveling power transmission system in the rearward extending casing member 72 is transmitted through drive shafts (not shown) inserted into the drive shaft casing members 78 and 78 to the front gear casing members 79 and 79, respectively, then followed by transmitting the combined rotational velocity through the transmission shafts 83 and 83 and then the rear gear casing members 82 and 82 to the drive wheel support shafts 84 and 84, respectively. The combined rotational velocity is then transmitted to the drive wheels 13 and 13 and then to the crawlers 14 and 14, respectively.

The front PTO shaft 8 is disposed projecting forward from the front decelerating casing member 85 via the latitudinal casing member 71 of the transmission section 6 so that the power can be transmitted therefrom to a snow removal machine (although not shown) or other machines connected to the front portion of the work vehicle A.

On the other hand, the rear PTO shaft 9 is disposed projecting rearward from the right-hand side portion of a rear decelerating casing member 86 disposed at the rear portion of the frame member 2 of the vehicle body, and a PTO transmission shaft 87 is interposed between the left-hand side portion of the rear decelerating casing member 86 and the left-hand side portion of the longitudinal casing member 71.

In the embodiments as described above, the rear PTO shaft 9 is operatively coupled with an input shaft 91 through a tilting apparatus-transmitting shaft 92, the input shaft 91 being disposed projecting forward from a tilting casing member 90 of the tilting machine B.

### INDUSTRIAL APPLICABILITY

The present invention can achieve the effects as will be described hereinafter.
(1) The work vehicle according to the present invention has the frame member of the vehicle body thereof interposed between a pair of the left-hand and right-hand traveling sections each of a crawler type, with the operation section, the motor section and the transmission section disposed on the frame member of the vehicle body. Each of the traveling sections is composed of a longitudinal frame member extending in the forward-rearward direction, front and rear follower wheels mounted on the respective front and rear end portions of each traveling section, the drive wheel interposed between the front and rear follower wheels and disposed over them as well as operatively coupled with the motor section through the transmission section, and the crawler in the triangular form, when looked from the side, wound between the drive wheel and the front and rear follower wheels. The operation section is provided with the steering wheel disposed in the forefront portion of the vehicle body.
   As the front portion of the crawler for the traveling section of the work vehicle wound is shaped in a triangular form at an acute angle, when looked from the side, the work vehicle can move smoothly even on a soft ground, particularly on a ground piled up on level with the approximately lowest ground level. Therefore, this structure of the crawler can improve traveling performance and work performance.8*-
   Further, the steering wheel of the operation section is disposed at the forefront portion of the vehicle body so that a good forward visible field can be ensured for the operator performing the steering operation with the steering wheel while being seated on the operator' s seat in the operation section. Therefore, this structure of the vehicle body can also provide a high level of traveling performance and work performance and improve safety to a great extent.
   Moreover, the operator can also operate the steering wheel while walking on the ground in front of or along the vehicle body. Therefore, for example, the operator may otherwise feel the fear in operating the work vehicle on an inclining ground such as vineyards or the like while seated on the operator' s seat in the operation section. Even in this case, however, the work vehicle according to the present invention can help the operator in removing the fear in conducting work on an inclining ground and can readily operate the vehicle body by means of the steering wheel while walking on the ground in front of or along the vehicle body.
(2) The vehicle body of the work vehicle is provided with the front PTO shaft at the front portion thereof and with the rear PTO shaft at the rear portion thereof. Further, the front PTO shaft is operatively coupled with the rear PTO shaft through the motor section and the transmission section.
   Therefore, the power can be taken from the front PTO shaft when a working machine or the like is coupled with the front portion of the vehicle body in accordance with working conditions and so on. On the other hand, the power can be taken from the rear PTO shaft when a working machine or the like is coupled with the rear portion of the vehicle body in order to adapt to work for versatile uses.
(3) The work vehicle according to the present invention is composed of a pair of the left-hand and right-hand traveling sections each of the crawler type and the frame member of the vehicle body interposed between the left-hand and right-hand traveling sections, with the operation section, the motor section and the transmission section disposed on the frame member. The operation section is operatively coupled with the traveling sections via the transmission section that can combine the rotational velocity of the straight-traveling power transmission system with the rotational velocity of the cornering power transmission system to yield a combined rotational velocity. The combined rotational velocity can drive the left-hand and right-hand traveling sections independently and separately. Further, the operation section is provided with the steering wheel for steering the traveling sections, and the steering wheel is operatively coupled with the cornering non-stage shift system for accelerating or decelerating the rotational velocity of the cornering power transmission system to associate the operations of the steering wheel for the left-hand and right-hand rotations with the operations of the cornering non-stage shift system for the normal and reverse rotations.
   The cornering non-stage shift system can be rotated to the normal or reverse direction in proportion to a steered amount of the left-hand or right-hand rotation of the steering wheel in the manner as described above. Further, it can accelerate or decelerate the rotational velocity of the cornering power transmission system. Therefore, the operator operating the rotation of the steering wheel can readily obtain a feeling of operation for adjusting a minute cornering speed of the vehicle body. This can also assist in improving operability.
(4) For the work vehicle according to the present invention, the steering link mechanism system is operatively coupled with the steering wheel via the steering wheel support shaft and it is further coupled operatively with the trunnion arm member of the cornering non-stage shift system.
   This structure can operatively couple the steering wheel with the cornering non-stage shift system readily and certainly, thereby improving operating performance and workability.
(5) For the work vehicle according to the present invention, the shift lever is operatively coupled with the trunnion arm member of the straight-traveling non-stage shift system for accelerating or decelerating the rotational velocity of the straight-traveling power transmission system, whereby the forward-rearward shift operations of the shift lever can be associated with the operation for the normal or reverse rotation by means of the straight-traveling non-stage shift system.
   This structure enables an easy operation of the steering wheel for performing the forward-rearward shifts and a non-stage shift operation between the forward range and the rearward range bridging the neutral position of the shift lever.
   Therefore, the work vehicle according to the present invention can achieve operating efficiency to a remarkable extent because the forward-and rearward-traveling speeds of the vehicle body can be adjusted at a non stage in accordance with working conditions and so on.
(6) For the work vehicle according to the present invention, the operation section has the floor section at the front portion of the vehicle body, which is formed inclining upwardly in a forward direction.
   The upwardly inclining floor section at the front portion of the operation section allows the operator to place the feet thereon in a safe manner even upon traveling on a ground inclining downward. Therefore, the operator can achieve a safe operation without feeling a fear even while operating the vehicle on a downward inclining ground.
(7) The work vehicle according to the present invention is provided with the steering link mechanism system formed in a compact structure and disposed directly under the front portion of the floor section inclining upwardly in a forward direction.
   As the compact-structured steering link mechanism system is disposed directly under the front portion of the floor section in the manner as described above, it can be prevented from damages and breakage upon impact on irregular surfaces of the ground while traveling. Further, a space on the floor section at and around the feet of the operator can be made considerably wide open so that the freedom of the space at and around the feet of the operator can be ensured to a great extent. As a consequence, seating comfortableness and operability of the vehicle body can be improved to a great extent.
   In other words, the work vehicle according to the present invention allows the steering link mechanism system coupled operatively with the steering wheel via the steering wheel support shaft to be disposed in a compact manner directly under the front portion of the floor section, so that the surroundings around the steering wheel support shaft can be rendered slimmer and consequently the space of the floor section at and around the feet of the operator can be rendered wide. Therefore, the freedom of the space on the floor section at and around the feet of the operator can be ensured to a great extent. Moreover, seating comfortableness and operability of the vehicle body can be improved greatly.
(8) For the work vehicle according to the present invention, the steering link mechanism system is provided with the rotational-direction shift mechanism system for shifting the normal and reverse rotational directions of the output shaft of the cornering non-stage shift system, and the rotational-direction shift mechanism system is operatively coupled with the shift lever to associate the forward- and rearward-traveling shift operations of the shift lever with the operations for shifting the normal and reverse rotational directions of the output shaft of the cornering non-stage shift system by means of the rotational-direction shift mechanism system.

The operating performance of the rotational-direction shift mechanism system can be ensured, like the steering link mechanism system, in the manner as described above. Further, the rotational-direction shift mechanism system can prevent an occurrence of an error operation by bringing the cornering direction at the time of rearward traveling into agreement with the direction of the cornering operation of the vehicle body, even upon operating the shift lever for the rearward-traveling status. As a result, the work vehicle according to the present invention can greatly ensure operability and safety.

## Claims

1. An work vehicle having a pair of left-hand and right-hand traveling sections (1, 1) each of a crawler type, and a frame member (2) of a vehicle body interposed between the pair of the left-hand and right-hand traveling sections (1, 1) with an operation section (3), a motor section (5) and a transmission section (6) disposed on the frame member (2) of the vehicle body;
wherein the traveling section (1) comprises a longitudinal frame member (10) extending in a forward-rearward direction; front and rear follower wheels (11, 12) mounted on front and rear end portions of the longitudinal frame member (10), respectively; a drive wheel (13) disposed between and above the front and rear follower wheels (11, 12) and operatively coupled with the motor section (5) through the transmission section (6); and a crawler (14) in a triangular form, when looked from the side, wound about the drive wheel (13) and the front and rear follower wheels (11, 12); and
wherein the operation section (3) is provided with a steering wheel (29) disposed at a forefront portion of the vehicle body.

2. The work vehicle as claimed in claim 1, wherein:
the vehicle body is provided with a front PTO shaft (8) at a front portion thereof and the vehicle body is provided with a rear PTO shaft (9) at a rear portion thereof; and
the front PTO shaft (8) and the rear PTO shaft (9) are operatively coupled with the motor section (5) through the transmission section (6).

3. An work vehicle comprising a pair of left-hand and right-hand traveling sections (1, 1) each of a crawler type, a frame member (2) of a vehicle body interposed between the pair of the left-hand and right-hand traveling sections (1, 1) with an operation section (3), a motor section (5) and a transmission section (6) disposed on the frame member (2); having the pair of the left-hand and right-hand traveling sections (1, 1) coupled operatively with the motor section (5) through the transmission section (6); and driving the pair of the left-hand and right-hand traveling sections (1, 1) independently and separately by means of a combined rotational velocity obtained by combining a rotational velocity of a straight-traveling power transmission system with a rotational velocity of a cornering power transmission system; wherein:
the operation section (3) is provided with a steering wheel (29) for steering the pair of the left-hand and right-hand traveling sections (1, 1); and
the steering wheel (29) is operatively coupled with a cornering non-stage shift system (76) for accelerating and decelerating the rotational velocity of the cornering power transmission system to associate an operation of the steering wheel (29) for shifting left-hand and right-hand rotations with an operation of the cornering non-stage shift system (76) for shifting normal and reverse rotation.

4. The work vehicle as claimed in claim 3, wherein:
the steering wheel (29) is operatively coupled with a steering link mechanism system (31) through a steering wheel support shaft (28); and
the steering link mechanism system (31) is operatively coupled with a trunnion arm member (76a) of the cornering non-stage shift system (76).

5. The work vehicle as claimed in claim 4, wherein a trunnion arm member (77a) of a straight-traveling non-stage shift system (77) is operatively coupled with a shift lever (32) for shifting a forward-traveling operation or a rearward-traveling operation or shifting a speed of the vehicle body to associate the operation of the shift lever (32) for shifting a forward-traveling operation or a rearward-traveling operation or shifting a speed of the vehicle body with the operation of the straight-traveling non-stage shift system (77) for normal or reverse rotation.

6. The work vehicle as claimed in claim 5, wherein the vehicle body is provided with a floor section (26) at a front portion thereof and a front portion (26a) of the floor section (26) is formed inclining upwardly in a forward direction.

7. The work vehicle as claimed in claim 6, wherein the steering link mechanism system (31) is formed in a compact manner and disposed directly under the front portion (26a) of the floor section (26) formed inclining upwardly in a forward direction.

8. The work vehicle as claimed in claim 7, wherein:
the steering link mechanism system (31) is provided with a rotational-direction shift mechanism system (34) for shifting a normal rotational direction or a reverse rotational direction of an output shaft of the cornering non-stage shift system (76); and
the rotational-direction shift mechanism system (34) is operatively coupled with the shift lever (32) to associate an operation of the shift lever (32) for a forward- or rearward traveling shift with an operation of the output shaft of the cornering non-stage shift system (76) for shifting the normal or reverse rotational direction by the rotational-direction shift mechanism system (34).
